# EUROPÄISCHE PATENTSCHRIFT

(11) **EP 1 275 334 B1**
(45) Veröffentlichungstag und Bekanntmachung des Hinweises auf die Patenterteilung: **02.03.2005**
(21) Anmeldenummer: 02015709.5
(22) Anmeldetag: 12.07.2002
(51) Int. Cl.: A47J 36/06, A47J 36/12

(54) **Multifunktionaler Deckel für ein Gargerät**
Multifunctional lid for a cooking appliance
Couvercle multifonctionel pour un appareil de cuisson

(30) Priorität: 12.07.2001 DE 10134006
(43) Veröffentlichungstag der Anmeldung: 15.01.2003
(73) Patentinhaber: Rational AG, 86899 Landsberg a. Lech (DE); FRIMA S.A., 68271 Wittenheim Cedex (FR)
(72) Erfinder: Wagner, Stefan, 68127 Oberhergheim (FR); Wiedemann, Peter, 86836 Klosterlechfeld (DE); Kohlstrung, Peter, 86899 Landsberg (DE)
(74) Vertreter: Weber-Bruls, Dorothée, Dr.

(56) Entgegenhaltungen:
- DE-A- 19 653 279
- DE-A- 19 718 399
- DE-A- 19 838 864

## Beschreibung

Die Erfindung betrifft einen Deckel für ein Gargerät mit mindestens einem von dem Deckel zumindest teilweise verschließbaren Garbehälter, insbesondere in Form eines Tiegels, und/oder mindestens einer von dem Deckel zumindest teilweise abdeckbaren Garfläche.

Es sind im Stand der Technik eine Vielzahl von Gargeräten bekannt, die zumindest einen Garbehälter aufweisen, der nach obenhin offen und während eines Garprozesses frei zugänglich bzw. mit einem Deckel verschließbar ist.

So ist aus der DE 196 53 279 A1 beispielsweise ein Gargerät für Lebensmittel bekannt, welches einen höhenverstellbar gehaltenen Deckel aufweist. Eine längs verschiebbare und vorzugsweise um ihre Längsachse drehbar gelagerte Führung des Deckels ermöglicht es, einen Garbehälter, welcher mit dem Deckel verbindbar ist, aus einer Garkammer herauszuheben und auf einer neben dem Gargerät angeordneten Abstellfläche abzustellen.

Aus der US 6,153,244 ist eine Vorrichtung zum Hochgeschwindigkeitsgrillen bzw. Konditionieren eines Speiseprodukts bekannt. Diese Vorrichtung umfaßt einen Deckel, welcher einen Wasserzulauf umfaßt, mit dem einer Kammer während des Grillens Flüssigkeit zur Erzeugung von Wasserdampf zugeführt werden kann. Dabei ist vorgesehen, daß die zugeführte Wassermenge automatisch gemessen wird und der Deckel vor bzw. nach dem Grillvorgang automatisch geöffnet bzw. geschlossen wird.

Die DE 85 07 365 U1 offenbart einen Deckel für einen Herd, wobei der Deckel zwei miteinander im Deckel verbundene Kanäle aufweist, durch die Luft fließen kann. Diese Luft wird mittels eines Ventilators, welcher außerhalb des Deckels angeordnet ist, angetrieben. Die durch den Deckel strömende Luft wird durch eine Herdplatte, welche im thermischen Kontakt mit dem Deckel steht, erwärmt, und kann somit zum Heizen eines vom Herd entfernten Raumes bzw. Raumbereichs verwendet werden, indem sie durch einen am Herd angeordneten Kanal vom Herd in diesen Raum geführt wird.

Aus der US 3,598,105 ist ein Deckel für einen Garbehälter bekannt, der mehrere Kanäle aufweist, durch die dem Garbehälter während eines Garprozesses zusätzliche Flüssigkeit zugeführt werden kann, ohne das dazu der Deckel vom Garbehälter entfernt werden muß. Darüber hinaus dienen die Kanäle zum Abführen von Wasserdampf und nicht kondensierbaren Gasen.

Eine Vorrichtung zur regelbaren Abfuhr von Wasserdampf aus einem Garbehälter ist aus der EP 0 839 485 A1 bekannt. Das dort offenbarte System zum ökologischen Kochen von Speisen umfaßt einen Deckel, welcher eine Regulationsvorrichtung für den Auslaß von in Luft befindlichem Fluid aus dem Garbehälter umfaßt.

Aus der US 4,569,277 ist darüber hinaus eine Garvorrichtung für Pasta und ähnliches bekannt. Diese Vorrichtung weist eine Vielzahl von verschieden großen Garbehältern auf. Die Garbehälter sind so ausgeführt, daß den Garbehältem über ein am Garbehälterboden befindliches Ventil Flüssigkeit zugeführt und aus den Garbehältern abgeführt werden kann. Die Vorrichtung ist so aufgebaut, daß die Oberseite der Vorrichtung mittels Deckeln verschlossen werden kann, diese jedoch die Garbehälter nicht verschließen. Der aus den Garbehältern austretende Wrasen wird über eine Abzugseinrichtung im Inneren der Vorrichtung aus dem Zwischenraum zwischen den Deckeln und Garbehältern aus der Vorrichtung abgeführt.

Darüber hinaus sind aus dem Stand der Technik weitere Vorrichtungen zum Abzug von Wrasen aus bzw. von einem Gargerät bekannt. So offenbart die DE 198 42 758 A1 eine Gareinrichtung mit Dunstabzugshaube. Diese Dunstabzugshaube ist über dem Gargerät höhenverstellbar angeordnet und über zumindest eine beheizte Fläche des Gargeräts absenkbar. In die Dunstabzugshaube ist ein Katalysator zur Reinigung der abgesaugten Dünste angeordnet, welcher mit der beheizten Fläche so eng wie möglich thermisch gekoppelt ist.

Aus der DE 44 12 843 A1 ist ein Deckel für ein Bratgerät bekannt. Dieser Deckel wird während des Bratvorgangs auf das Bratgerät so aufgesetzt, daß eine Luftzuführung zwischen dem oberen Rand des Bratgeräts und dem unteren Deckelrand gebildet wird. Dies ermöglicht die Zuströmung von Luft. Während des Bratens entstehender Wrasen kann über Ausströmöffnungen, welche im oberen Bereich des Deckels angeordnet sind, ausströmen, wobei die Ausströmmenge über Einrichtungen im Bereich der Ausströmöffnungen regelbar ist.

Zudem offenbart die WO 99/08581 einen Deckel für ein Gargerät. Die Unterseite des Deckels weist Einlaßöffnungen auf, und die Oberseite des Deckels weist Auslaßöffnungen auf, die mit der Umgebung kommunizieren. Im Bereich zwischen diesen Öffnungen ist ein Filterelement zum Absorbieren von Gerüchen und Fett anordbar. Dieser Deckel ermöglicht jedoch nicht die Zufuhr eines Fluids in einen durch den Deckel verschlossenen Garbehälter.

Ferner sind aus dem Stand der Technik Vorrichtungen zur Zufuhr eines Fluids in einen schrankförmig aufgebauten Garraum bekannt. Die DE 42 23 451 C2 offenbart beispielsweise ein Gargerät zum Garen von Nahrungsmitteln, das einen schrankförmigen Garraum aufweist, der durch eine Garraumtür verschlossen werden kann und von Garraumwänden begrenzt ist. Innerhalb der Garraumwände sind Zuleitungen für eine Sprühdüse bzw. eine Dampfwasserzufuhr vorgesehen, die zur Zufuhr von Wasser zur Erzeugung von Wasserdampf bzw. Berieselung eines innerhalb des Garraums angeordneten Garguts dienen.

Darüber hinaus beschreibt die nicht vorveröffentlichte DE 199 61 835 A1 ein Verfahren sowie eine Vorrichtung zum automatischen Gargerätereinigen. Bei dem zu reinigenden Gargerät handelt es sich ebenfalls um ein schrankförmiges Gargerät, dessen Garraum über eine Garraumtür zugänglich ist. An einer Wand des Garraums ist ein drehbeweglicher Sprüharm befestigt. Die Versorgung des Sprüharms mit einer Flüssigkeit folgt über ein in der Garraumwand angeordnetes Zuleitungsssystem.

Nachteilig bei den aus dem Stand der Technik bekannten Gargeräten mit tiegelförmigen Garbehältern ist jedoch, daß zur Ausführung verschiedener Funktionen des Gargeräts zusätzliche Aufbauten am Gargerät notwendig sind, was den konstruktiven Aufwand des Gargeräts erhöht, daß der Zugang zu einem Garbehälter während der Ausführung verschiedener Funktionen des Gargeräts erschwert ist, was die Funktionalität des Gargeräts einschränkt, und daß jeder Garbehälter konstruktiv an das Gargerät angepaßt werden muß.

Aufgabe der vorliegenden Erfindung ist es daher, einen multifunktionalen Deckel für ein Gargerät bereitzustellen, so daß die Nachteile des Stands der Technik überwunden werden.

Diese Aufgabe wird erfindungsgemäß dadurch gelöst, daß der Deckel multifunktional ist, wobei über den Deckel beim Garen in dem Gargerät und/oder beim Reinigen des Gargeräts zumindest ein erstes Medium zuführbar ist über zumindest einen Zufuhrkanal und/oder zumindest ein zweites Medium abführbar ist über zumindest eine Absaugvorrichtung und/oder zumindest einen Abfuhrkanal, und der Deckel mechanische Funktionen erfüllt über zumindest eine Hebe-/Senkvorrichtung, insbesondere um zumindest einen Garkorb aus bzw. in den Garbehälter zu befördern, und über zumindest eine Kippvorrichtung, insbesondere für den Garkorb, und zumindest eine Dichtvorrichtung, zumindest eine Verschlußvorrichtung und/oder zumindest eine Halterung für zumindest einen ersten Sensor, zumindest einen Garprozeßfühler, zumindest eine Düse und/oder eine Handbrause.

Eine erfindungsgemäße Ausführungsform ist gekennzeichnet durch zumindest einen zweiten Sensor, vorzugsweise einen Temperatursensor zur Bestimmung der Temperatur zumindest eines Teils des Deckels, zumindest ein Gebläse, zumindest eine Beleuchtungsvorrichtung, zumindest eine Dampferzeugungseinheit, zumindest eine Pumpe, zumindest ein Ventil, zumindest eine Eingabeeinheit, zumindest eine Ausgabeeinheit, zumindest eine Speichereinheit, zumindest eine Steuer- und/oder Regeleinheit und/oder zumindest einen Mikroprozessor.

Ferner wird erfindungsgemäß vorgeschlagen, daß die Absaugvorrichtung eine Filtervorrichtung für in abgesaugter Atmosphäre vorhandene Schmutz-, Fett- und/oder Geruchspartikel, und ein, vorzugsweise in der Drehzahl regel- und/oder steuerbares, zweites Gebläse umfaßt, mit einer vom Gargerät wegführenden, einen ersten Abfuhrkanal bildenden Abluftleitung verbindbar ist und/oder mit zumindest einem Ablöschkasten zur Erzeugung eines Unterdrucks, in Wirkverbindung steht.

Auch kann vorgesehen sein, daß ein erster Zufuhrkanal ein Fluidzufuhrkanal ist, der mit zumindest einer Düse, einem, vorzugsweise mehrere Sprühdüsen umfassenden, Drehsprinkler und/oder Kippsprinkler, einer Berieselungsvorrichtung, zumindest einem Durchflußmengensensor, zumindest einem ersten Ventil und/oder zumindest zeitweise mit der Dampferzeugungseinheit verbindbar ist.

Eine Weiterentwicklung des erfindungsgemäßen Deckels dadurch gekennzeichnet, daß ein erster Abfuhrkanal ein Fluidablaufkanal ist, der mit einer, vorzugsweise schmutzgängigen, Pumpe und/oder zumindest einem zweiten Ventil verbindbar ist.

Bevorzugt ist erfindungsgemäß, daß einen zweiten Abfuhrkanal auf der dem Garbehälter zugewandten Seite des Deckels mit einer Verlängerung, vorzugsweise in Schnorchelform und/oder in der Länge variierbar.

Mit der Erfindung wird auch vorgeschlagen, daß garprozeß-, reinigungsprozeß- und/oder gargutspezifische Daten, wie Feuchte, Druck, Temperatur, Luftbewegung im Garbehälter, Bräunung, (Ph)-Wert, Durchmesser des Garguts, Dichte des Garguts, Gargutart, Reifegrad des Garguts, Konsistenz des Garguts, Lagerzustand des Garguts, Geschmack des Garguts, Qualität des Garguts, Krustenbildung des Garguts, Vitaminabbau des Garguts, Geruch, Entstehung konzerogener Substanzen, Hygiene, Wärmeleitfähigkeit des Garguts, und/oder dergleichen, über die Sensoren und/oder den Garprozeßfühler aufnehmbar sind.

Auch kann vorgesehen sein, daß die Beleuchtungsvorrichtung elektromagnetische Strahlung im sichtbaren Bereich und/oder im infraroten Bereich emittiert und/oder empfängt.

Schließlich ist ein erfindungsgemäßer Deckel dadurch gekennzeichnet, daß der Zufuhrkanal, der Abfuhrkanal und/oder eine Verbindungsleitung zumindest teilweise längs der Drehachse des Deckels und/oder zumindest teilweise durch die Kippvorrichtung verläuft bzw. verlaufen.

Der Erfindung liegt somit die überraschende Erkenntnis zugrunde, daß der Deckel eines Gargeräts so ausgeführt werden kann, daß er zur zentralen Medienzufuhr- und Medienabfuhrstelle bzw. zur zentralen alle Funktionen, mit Ausnahme des Garens selbst, durchgeführenden Einrichtung des Gargeräts wird.

Weitere Merkmale und Vorteile der Erfindung ergeben sich aus der nachstehenden Beschreibung, in der bevorzugte Ausführungsformen der Erfindung beispielhaft anhand schematischer Zeichnungen erläutert sind. Dabei zeigt:
- Fig. 1: eine perspektivische Ansicht einer ersten Ausführungsform des erfindungsgemäßen Deckels;
- Fig. 2: eine seitliche Schnittansicht eines Gargeräts mit einem erfindungsgemäßen Deckel gemäß einer zweiten Ausführungsform;
- Fig. 3: eine Frontansicht des Gargeräts der Fig. 2;
- Fig. 4: eine seitliche Schnittansicht eines Gargeräts mit einem Deckel gemäß einer dritten erfindungsgemäßen Ausführungsform;
- Fig. 5: eine Frontansicht des Gargeräts der Fig. 4; und

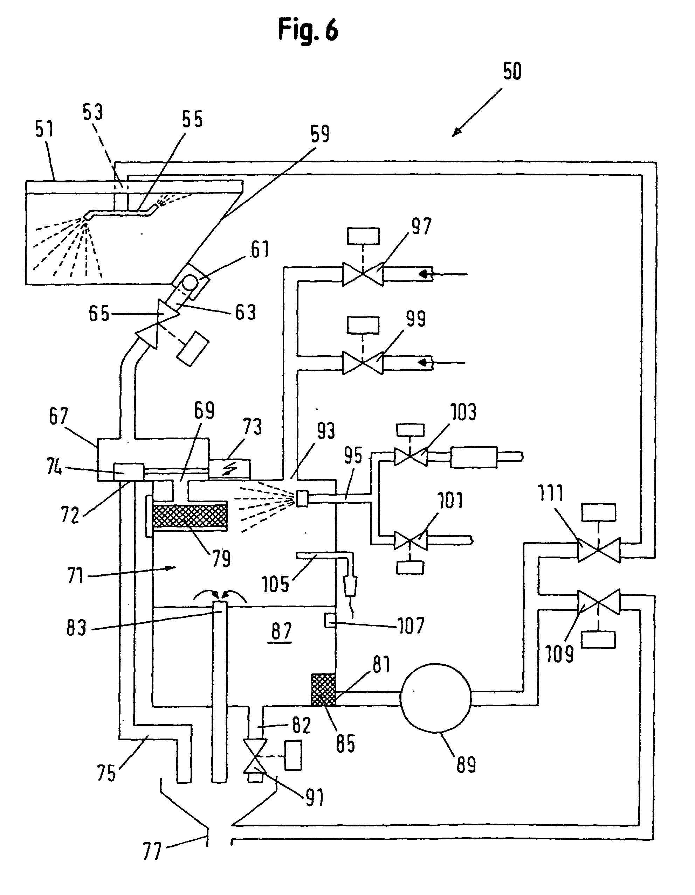

- Fig. 6: eine schematische Darstellung der Verbindung eines erfindungsgemäßen Dekkels mit einem Ablöschkasten.

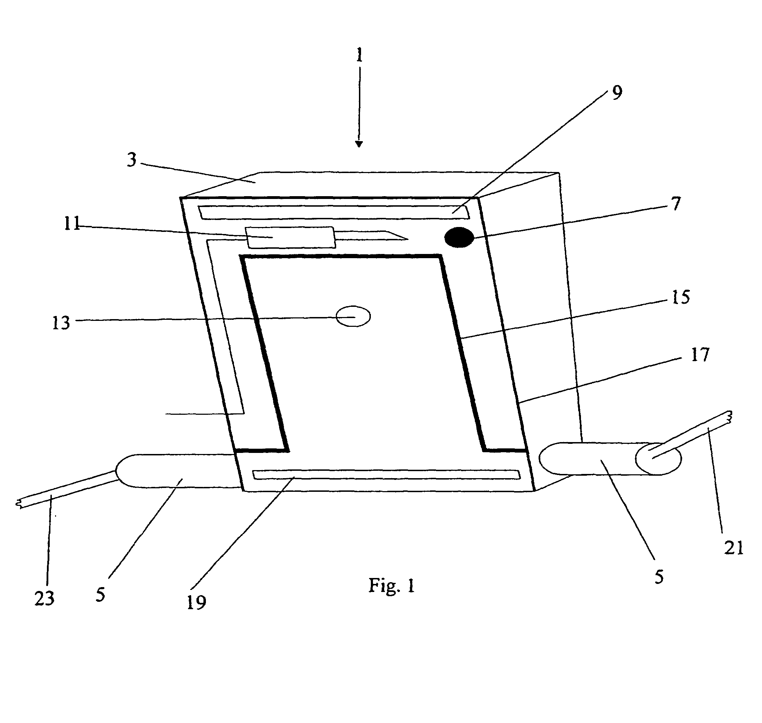

In Fig. 1 ist ein Gargerät 1 mit einem erfindungsgemäßen Deckel 3 dargestellt. Der Deckel 3 ist mittels einer Kippvorrichtung 5, welche mit einem nicht dargestellten Gehäuse des Gargeräts 1 verbunden ist, kippbar gelagert. Darüber hinaus umfaßt der Deckel 3 einen Drucksensor 7 zur Messung des Druckes in einem nicht dargestellten Garbehälter, welcher durch den Dekkel verschließbar ist, eine Absaugöffnung 9 einer nicht dargestellten und in den Deckel integrierten Absaugvorrichtung, insbesondere für die Absaugung von Wrasen, eine Halterung für einen Garprozeßfühler 11, eine Wasserzufuhröffnung 13 eines nicht dargestellten und im Deckel 3 zumindest teilweise integrierten Fluidzufuhrkanals, eine Hebe-/Senkvorrichtung für einen nicht dargestellten Garkorb, Dichtungen 17 zum druckdichten Verschließen des Garbehälters und eine Wasserabflußöffnung 19 eines nicht dargestellten und im Deckel 3 integrierten Flüssigkeitskanals. Die Leitungen zur Versorgung der im Deckel 3 vorhandenen Einbauten, insbesondere eine Wasserversorgungsleitung 21 und eine Wasserentsorgungsleitung 23 verlaufen durch die Kippvorrichtung 5.

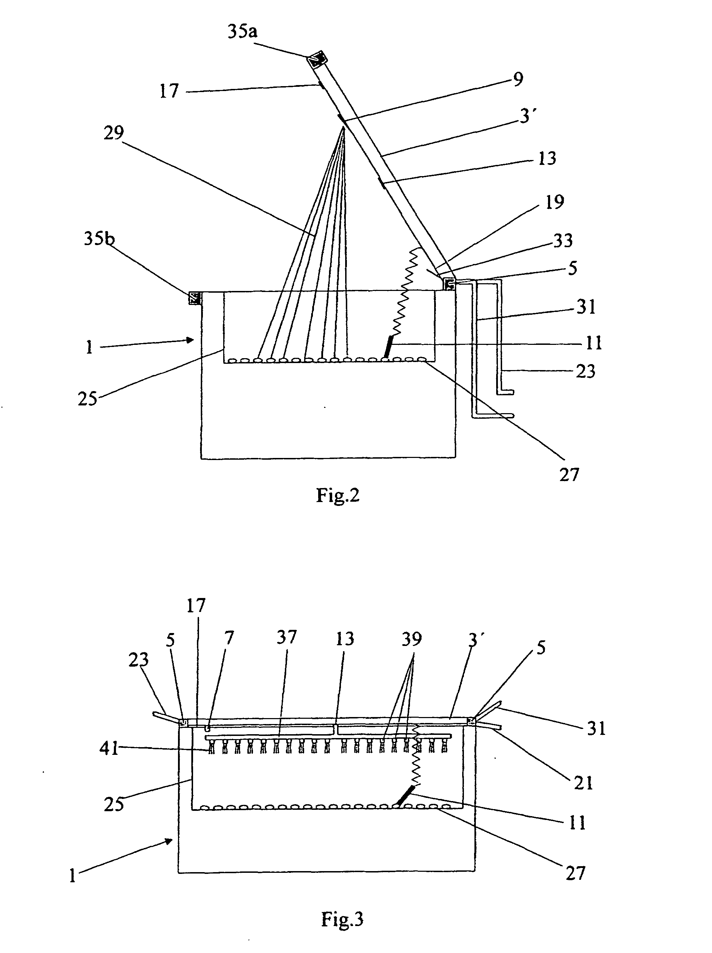

Fig. 2 zeigt ein Gargerät 1, welches einen Deckel 3' entsprechend einer zweiten erfindungsgemäßen Ausführungsform umfaßt. Die Bezugszeichen entsprechen denjenigen in Fig. 1. Das Gargerät 1 umfaßt darüber hinaus einen Garbehälter 25, in welchem sich Gargut 27 befindet. Der Garprozeßfühler 11 ist aus der Halterung am Deckel 3' entnommen und in das Gargut 27 eingeführt. In Fig. 2 wird das Anbraten des Gargutes 27 im Garbehälter 25 dargestellt. Dazu wird der Garbehälter 25 über eine nicht dargestellte Heizvorrichtung erwärmt und die während des Anbratens des Garguts 27 entstehenden Wrasen 29 werden über die Absaugöffnung 9 abgesaugt. Dazu umfaßt die Absaugvorrichtung ein nicht dargestelltes Gebläse, über das die abgesaugten Wrasen 29 einer Abluftleitung 31, welche durch die Kippvorrichtung 5 des Dekkels 3' verläuft, zugeführt werden. Darüber hinaus umfaßt die Absaugvorrichtung eine nicht dargestellte Filtereinrichtung, mit welcher Schmutz-, Fett- und Geruchspartikel aus der abgesaugten Luft entfernt werden. Aufgrund der niedrigeren Temperatur der Oberfläche des Dekkels 3' kommt es zur Kondensation von Flüssigkeit auf der dem Garbehälter 25 zugewandten Seite des Deckels 3'. Die so kondensierte Flüssigkeit läuft aufgrund der Gravitation den Dekkel 3' hinab und wird mittels eines Umlenkbleches 33, welches vor der Wasserabflußöffnung 19 angeordnet ist, der Wasserabflußöffnung 19 zugeführt. Von der Wasserabflußöffnung 19 wird die Flüssigkeit durch den Flüssigkeitskanal im Deckel 3', in dessem Verlauf eine nicht dargestellte schmutzgängige Pumpe angeordnet ist, in die Wasserentsorgungsleitung 23 gefördert.

Anhand von Fig. 3 wird nun die weitere Behandlung des Garguts 27 erläutert. Nach Beendigung des Anbratens des Garguts 27 wird die Wasserzufuhröffnung 13 mit einem Sprinkler 37, welcher mehrere Sprühdüsen 39 aufweist, verbunden. Über eine nicht dargestellte Eingabeeinheit im Deckel 3' gibt ein Benutzer Daten für ein anschließendes Druckgaren ein, welche über eine nicht dargestellte Anzeigeeinheit im Deckel 3' angezeigt werden. Eine nicht dargestellte Regelungseinheit führt den folgenden Druckgarprozeß automatisch durch. Anschließend wird der Garbehälter 25 mittels des Deckels 3' durch die Verschlußvorrichtungen 35a, 35b und die Dichtung 17 druckdicht verschlossen. Darüber hinaus wird das Gebläse zur Absaugung des Wrasen 29 ausgeschaltet. Im nächsten Garschritt wird über die Wasserzufuhröffnung 13 und den Sprinkler 37 Wasser 41 zugeführt, welches in Form von Wasserstrahlen aus den Sprühdüsen 31 austritt. Dieses Wasser dient zur Ablöschung des Garguts 27. Aufgrund der Temperatur des Garbehälters 25 und des Garguts 27 entsteht Wasserdampf und ein Überdruck im Garbehälter 25, welcher über den Drucksensor 7 gemessen wird. Dieser ist mit der Regelungseinheit verbunden. Die Regelungseinheit ist darüber hinaus mit einem nicht dargestellten ersten und zweiten Ventil an der Absaugöffnung 9 und Wasserabflußöffnung 19 und einer nicht dargestellten Dampferzeugungseinheit im Deckel 3' verbunden. Die Dampferzeugungseinheit steht darüber hinaus mit der Wasserzufuhröffnung 13 in Verbindung und ermöglicht die Zufuhr von Wasserdampf in den Garbehälter 25. Durch Öffnen und Schließen des ersten Ventils bzw. Regelung des Wasser- bzw. Dampfzulaufs über die Wasserzufuhröffnung 13 wird der Druck innerhalb des Garbehälters 25 geregelt.

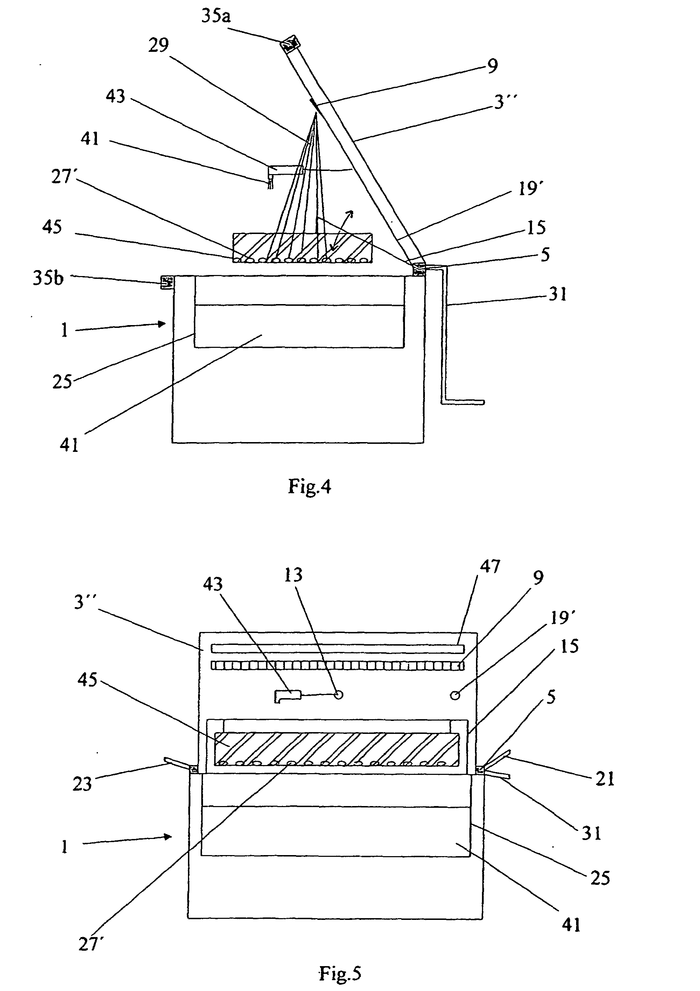

Fig. 4 und Fig. 5 zeigen ein Gargerät 1, welches einen Deckel 3" entsprechend einer dritten Ausführungsform umfaßt. Die Bezugszeichen entsprechen denen der vorherigen Figuren. An der Hebe- bzw. Senkvorrichtung 15 ist ein Garkorb 45 befestigt, in welchem sich ein Gargut 27', hier in Form von Nudeln, befindet. Nach Auswahl eines Garprogrammes durch den Benutzer in der oben beschriebenen Weise wird der Garbehälter 25 mit Wasser 41, welches über die nicht dargestellte Heizeinrichtung erwärmt wird, automatisch gefüllt. Wenn das Wasser 41 kocht, wird der Garkorb 45 über die Hebe- bzw. Senkvorrichtung 15 in den Garbehälter 25 eingebracht. Zur Durchführung des Garprozesses kann der Deckel 3" mittels der Kippvorrichtung 5 zum Verschließen des Garbehälters 25 durch die Verschlußvorrichtungen 35a, 35b gekippt werden. Nach Beendigung des Garvorgangs wird der Deckel 3" geöffnet und nach Öffnen des Deckels 3" der Garkorb 45 automatisch über die Hebe- bzw. Senkvorrichtung aus dem Garbehälter 25 gehoben. Zum gleichen Zeitpunkt wird das Gebläse zur Absaugung der Wrasen 29 über die Absaugöffnung 9 und die Absaugvorrichtung eingeschaltet. Zum Abschrecken des Garguts 27' wird das Gargut 27' anschließend mittels einer Handbrause 43, welche an einer nicht dargestellten Halterung im Deckel 3" befestigbar ist, mit Wasser 41 bestrahlt. Um die Bearbeitung des Garguts 27' zu erleichtern, umfaßt der Deckel 3" eine Beleuchtungsvorrichtung 47. Diese emittiert elektromagnetische Strahlung sowohl im sichtbaren, als auch im infraroten Bereich. Durch die elektromagnetische Strahlung im sichtbaren Bereich, wird der Arbeitsbereich beleuchtet und mittels der Infrarotstrahlung ein Abkühlen des Garguts 27' verhindert. Nachdem der Garkorb 45 mit dem Gargut 27' entnommen ist, wird die Wasserabflußöffnung 19' mit einem nicht dargestellten Rohr, welches in seiner Länge der Tiefe des Garbehälters 25 angepaßt ist, verbunden und die Handbrause 43 von der Wasserzufuhröffnung 13 getrennt. Anschließend wird der Deckel 3" geschlossen und das im Garbehälter 25 vorhandene Wasser 41 durch das Rohr und die Wasserabflußöffnung 19' mittels einer nicht dargestellten schmutzgängigen Pumpe abgesaugt. Zur Reinigung des Garbehälters 25 wird anschließend über die Wasserzufuhröffnung 13 dem Garbehälter 25 Wasser zugeführt, welches anschließend über das Rohr und die Wasserabflußöffnung 19' abgesaugt wird. Durch diesen Wasserdurchfluß wird eine mechanische Reinigung des Garbehälters 25 erreicht.

In Figur 4 ist ein Gargerät 50 mit einem weiteren erfindungsgemäßen Deckel 51 dargestellt. Im Gegensatz zu der Ausführungsform des in den Figuren 1 und 2 dargestellten Deckels 3 weist der Deckel 51 nur einen Zulaufkanal 53 auf, der mit einem Drehsprinkler 55 verbindbar ist. Das Gargerät 50 umfaßt darüber hinaus einen Garbehälter in Form eines Tiegels 59. Der Tiegel 59 ist über eine Kippvorrichtung 61 kippbar gelagert. Durch die Kippvorrichtung 61 verläuft zumindest teilweise ein Ablaufkanal 63 aus dem Tiegel 59, mittels dem in dem Tiegel 59 vorhandenes Fluid ablaufen bzw. abgesaugt werden kann. Der Ablaufkanal 63 ist mittels eines Ventils 65 verschließbar.

Im Folgenden wird nun die vom Gargerät 50 und dem Deckel 51 teilweise umfaßte Reinigungseinrichtung erläutert:

Das Ventil 65 ist auf der dem Ablaufkanal 63 abgewandten Seite mit einem Verteiler 67 verbunden. Der Verteiler 67 weist eine erste Öffnung 69 auf, mittels der der Ablaufkanal 63 mit einem Ablöschkasten 71 verbindbar ist. Ferner weist der Verteiler 67 eine zweite Öffnung 72 auf, die eine Verbindung des Verteilers 67 über eine Leitung 75 mit einem Entsorgungskanal 77 ermöglicht. Die beiden Öffnungen 69 und 72 können wahlweise über einen mittels einer Antriebseinrichtung 73 angetriebenen Schieber 74 geöffnet bzw. verschlossen werden. Wird somit das Ventil 65 geöffnet und der Schieber 74 derart positioniert, daß die zweite Öffnung 72 geöffnet ist, während die erste Öffnung 69 verschlossen ist, so fließt ein innerhalb des Tiegels 59 vorhandenes Fluid über den Ablaufkanal 63 durch den Verteiler 67 und die Leitung 75 in den Entsorgungskanal 77.

Innerhalb des Ablöschkastens 71 ist eine Filtereinrichtung 79, die mit der ersten Öffnung 69 verbunden ist, angeordnet. Diese dient dazu, in einem über den Ablaufkanal 63 abfließenden Fluid vorhandene Fremdkörper heraus zu filtern, so daß diese nicht in den Ablöschkasten 71 gelangen können. Der Ablöschkanal 71 weist neben der ersten Öffnung 69 zwei Ablaufkanäle 81, 82 sowie einen Überlauf 83 auf. Im Bereich des ersten Ablaufkanals 81 ist eine Filtereinrichtung 85 angeordnet, die verhindert, daß in einer im Ablöschkasten 71 vorhandenen Flüssigkeit 87 vorhandene Schmutzpartikel zu einer Pumpe 89 gelangen können. Es bestehen grundsätzlich drei Möglichkeiten, wie die Flüssigkeit 87 den Ablöschkasten 71 verlassen kann. Steigt der Pegel der Flüssigkeit 87 über einen durch die Geometrie des Überlaufs 83 festgelegten Pegel hinaus, so fließt die Flüssigkeit 87 durch den Überlauf 83 in den Entsorgungskanal 77. Ferner kann die Flüssigkeit 87 durch Öffnen eines Ventil 91 im wesentlichen restlos aus dem Ablöschkasten 71 über den zweiten Ablaufkanal 82 in den Entsorgungskanal 77 abgelassen werden. Schließlich kann die Flüssigkeit 87 durch die Filtereinrichtung 85 und den ersten Ablaufkanal 81 durch die Pumpe 89 abgesaugt werden. Der Ablöschkasten 71 umfaßt darüber hinaus zwei Zuläufe 93, 95. Dabei steht der erste Zulauf 93 über Ventile 97, 99 mit nicht dargestellten Dampferzeugungseinheiten in Verbindung.

Die Flüssigkeit 87 kann einerseits durch den Ablaufkanal 63 aus dem Tiegel 59 in den Ablöschkasten 71 gelangen, andererseits kann dem Ablöschkasten 71 über den zweiten Zulauf 95 eine Flüssigkeit zugeführt werden. Dazu steht der zweite Zulauf 95 mit Ventilen 101, 103 in Verbindung, über die beispielsweise Warmwasser bzw. Kaltwasser geregelt zugeführt werden kann. Zur Steuerung der Dampfzufuhr bzw. der Flüssigkeitszufuhr über die Zuläufe 93, 95 sind innerhalb des Ablöschkastens 71 Sensoren 105, 107 angeordnet. Diese ermöglichen die Erfassung des Pegels der Flüssigkeit 87 sowie der Temperatur innerhalb des Ablöschkastens 71. Die Sensoren 105 und 107 sind mit einer nicht dargestellten Regel- bzw. Steuereinheit, die ferner mit den Ventilen 65, 91, 97, 99, 101, 103 sowie dem Antrieb 73 in Wirkverbindung steht, verbunden. Wird dem Ablöschkasten 71 über den zweiten Zulauf 95 kaltes Wasser zugeführt, so kommt es zu einer Kondensation von innerhalb des Ablöschkastens 71 vorhandenem gasförmigen Fluid. Dieser Unterdruck innerhalb des Ablöschkastens 71 bewirkt, daß in dem Fall, in dem sich der Schieber 74 in der in Figur 4 dargestellten Position befindet und das Ventil 65 geöffnet ist, über den Ablaufkanal 63 in dem Tiegel 59 vorhandenes Fluid aus dem Tiegel 59 abgesaugt wird. Hierbei kann es sich einerseits um Flüssigkeiten handeln, die sich während eines Reinigungsprozesses innerhalb des Tiegels 59 befindet. Die Verwendung des Ablöschkastens 71 ermöglicht es andererseits auch, daß in dem Fall, in dem innerhalb des Gargeräts 50 ein Dampfgarprozess stattfindet, im Tiegel 59 vorhandener Dampf bzw. Wrasen effektiv aus dem Tiegel 59 abgesaugt werden kann bzw. können. Dies ermöglicht wiederum eine sehr genaue Führung eines Dampfgarprozesses innerhalb des Tiegels 59.

Im Folgenden wird nunmehr der Ablauf eines Reinigungsprozesses innerhalb des Tiegels 59 mit Hilfe des erfindungsgemäßen Deckels 51 beschrieben:

Zunächst wird von einem Benutzer bei geöffnetem Deckel 51 sowie geschlossenem Ventil 65 manuell Wasser in den Tiegel 59 eingeführt. Ferner wird dem in den Tiegel 59 eingefüllten Wasser ein Reinigungs-und/oder Entkalkungsmittel in Form eines Tabs hinzugefügt. Anschließend wird vom Benutzer an den Zulaufkanal 53 der Drehsprinkler 55 angeschlossen und der Tiegel 59 mittels des Deckels 51 verschlossen. Anschließend wird über nicht dargestellte Heizelemente am Tiegel 59 das Wasser innerhalb des Tiegels 59 erwärmt. Um den Zeitpunkt zu bestimmen, an dem das Wasser im Tiegel 59 die gewünschte Temperatur hat, steht die nicht dargestellte Steuer- und Regeleinheit mit einem im Deckel 51 angeordneten, ebenfalls nicht dargestellten Temperatursensor zur Messung der Temperatur des Deckels 51 in Verbindung. Erreicht die Flüssigkeit innerhalb des Tiegels 59 die gewünschte Temperatur, so wird das Ventil 65 geöffnet und die zweite Öffnung 72 mittels des Schiebers 74 verschlossen. Dadurch fließt die innerhalb des Tiegels 59 vorhandene Flüssigkeit in den Ablöschkasten 71. Die sich innerhalb des Ablöschkastens 71 sammelnde Flüssigkeit 87 wird mittels der Pumpe 89 durch den ersten Ablaufkanal 81 aus dem Ablöschkasten 71 abgesaugt. Anschließend wird die Flüssigkeit 87 über ein geöffnetes Ventil 111 dem Zulaufkanal 53 des Deckels 51 zugeführt. Dadurch wird die Flüssigkeit in dem Tiegel 59 umgewälzt und somit eine Reinigung des Tiegels 59 erreicht. Erreicht der Verschmutzungsgrad der Flüssigkeit 87 einen bestimmten Wert, der mittels eines nicht dargestellten Sensors erfaßt wird, so wird einerseits das Ventil 111 geschlossen und andererseits ein Ventil 109 geöffnet. Dies bewirkt, daß die durch die Pumpe 89 angetriebene Flüssigkeit 87 dem Entsorgungskanal 77 zugeführt wird. Erreicht der Pegel der Flüssigkeit 87 innerhalb des Ablöschkastens 71 einen über den Sensor 107 erfaßten Minimalpegel, so wird die Pumpe 89 zunächst abgeschaltet und über die Ventile 101 und 103 dem Ablöschkasten 71 Wasser zugeführt. Dieses durch den Zulaufkanal 95 zugeführte Frischwasser wird anschließend durch die Pumpe 89 dem Tiegel 59 über den Zulaufkanal 53 zugeführt, indem das Ventil 109 geschlossen und das Ventil 111 wiederum geöffnet wird. Um zu vermeiden, daß die durch den Tiegel 59 umgewälzte Flüssigkeit erneut erwärmt werden muß, werden die Ventile 101 und 103 mittels der nicht dargestellten Steuer- und Regeleinheit derartig geöffnet bzw. geschlossen, daß die über den Sensor 105 gemessene Temperatur einen gewünschten Soll-Wert entspricht.

Nach Beendigung dieser Reinigungsphase, in welcher die Flüssigkeit 87 durch den Tiegel 59 umgewälzt wird, wird die Flüssigkeit 87 zur Umwälzung einmal vollständig ausgetauscht. Dazu wird der Schieber 74 mittels der Antriebseinrichtung 73 so verfahren, daß die erste Öffnung 69 verschlossen wird, die Pumpe 89 wird ausgeschaltet und das Ventil 111 geschlossen sowie das Ventil 91 geöffnet. Dies führt dazu, daß die Flüssigkeit, die aus dem Tiegel 59 in den Ablaufkanal 63 fließt, über die Leitung 75 in den Entsorgungskanal 77 fließt. Ferner wird die in dem Ablöschkasten 71 vorhandene Flüssigkeit 87 über den Ablaufkanal 82 und das Ventil 91 ebenfalls dem Entsorgungskanal 77 zugeführt. Anschließend wird die zweite Öffnung 72 wieder durch den Schieber 74 verschlossen, das Ventil 91 geschlossen und über die Ventile 101 und 103 dem Ablöschkasten 71 Flüssigkeit zum Spülen des Tiegels 59 zugeführt. Dann wird das Ventil 111 geöffnet und die Pumpe 89 eingeschaltet, so daß die Flüssigkeit wiederum durch den Tiegel 59 umgewälzt wird. Nach Abschluß dieser Spülphase des Tiegels 59 wird die Pumpe 89 abgeschaltet und die Flüssigkeit 87 in dem Ablöschkasten 71 gesammelt sowie dort für einen späteren Reinigungsprozeß gespeichert. Im Anschluß wird der Tiegel 59 in einer anschließenden Trocknungsphase getrocknet, indem die Wände des Tiegels 59 durch nicht dargestellte Heizelemente erwärmt werden. Dies geschieht bei geschlossenem Ventil 65. Zur Beendigung des Reinigungsprozesses wird das Ventil 65 geöffnet und innerhalb des Ablöschkastens 71 ein Unterdruck erzeugt, indem über die Ventile 101 bzw. 103 Wasser in den Ablöschkasten 71 eingeführt und so der im Tiegel 59 vorhandene Wasserdampf effektiv abgesaugt wird. Nach erneutem Verschließen des Ventils 65 wird der Tiegel 59 vom Benutzer durch Öffnen des Deckels 51 geöffnet und abschließend der Drehsprinkler 55 entnommen.

Es wird also erfindungsgemäß erstmals ein Deckel für ein Gargerät bereitgestellt, in welchem die verschiedensten Funktionen des Gargeräts mit Ausnahme des Garens selbst integriert sind.

Die in der vorstehenden Beschreibung, in den Zeichnungen sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Gargerät
- 3, 3', 3": Deckel
- 5: Kippvorrichtung
- 7: Drucksensor
- 9: Absaugöffnung
- 11: Garprozeßfühler
- 13: Wasserzufuhröffnung
- 15: Hebe-/Senkvorrichtung
- 17: Dichtung
- 19, 19': Wasserabflußöffnung
- 21: Wasserversorgungsleitung
- 23: Wasserentsorgungsleitung
- 25: Garbehälter
- 27, 27': Gargut
- 29: Wrasen
- 31: Abluftleitung
- 33: Umlenkblech
- 35a, 35b: Verschlußvorrichtung
- 37: Sprinkler
- 39: Sprühdüse
- 41: Wasser
- 43: Handbrause
- 45: Garkorb
- 47: Beleuchtungsvorrichtung
- 50: Gargerät
- 51: Deckel
- 53: Zulaufkanal
- 55: Drehsprinkler
- 59: Tiegel
- 61: Kippvorrichtung
- 63: Ablaufkanal
- 65: Ventil
- 67: Verteiler
- 69: Öffnung
- 71: Ablöschkasten
- 72: Öffnung
- 73: Antriebseinrichtung
- 74: Schieber
- 75: Leitung
- 77: Entsorgungskanal
- 79: Filtereinrichtung
- 81: Ablaufkanal
- 82: Ablaufkanal
- 83: Überlauf
- 85: Filtereinrichtung
- 87: Flüssigkeit
- 89: Pumpe
- 91: Ventil
- 93: Zulauf
- 95: Zulauf
- 97: Ventil
- 99: Ventil
- 101: Ventil
- 103: Ventil
- 105: Sensor
- 107: Sensor
- 109: Ventil
- 111: Ventil

## Patentansprüche

1. Deckel für ein Gargerät mit mindestens einem von dem Deckel zumindest teilweise verschließbaren Garbehälter, insbesondere in Form eines Tiegels, und/oder mindestens einer von dem Deckel zumindest teilweise abdeckbaren Garfläche, **dadurch gekennzeichnet, daß**
der Deckel (3, 3', 3") multifunktional ist, wobei
über den Deckel (3, 3', 3") beim Garen in dem Gargerät (1) und/oder beim Reinigen des Gargeräts (1) zumindest ein erstes Medium (41) zuführbar ist über zumindest einen Zufuhrkanal und/oder zumindest ein zweites Medium (29) abführbar ist über zumindest eine Absaugvorrichtung und/oder zumindest einen Abfuhrkanal, und
der Deckel (3, 3', 3") mechanische Funktionen erfüllt über zumindest eine Hebe/Senkvorrichtung (15), insbesondere um zumindest einen Garkorb (45) aus bzw. in den Garbehälter (25) zu befördern, und über zumindest eine Kippvorrichtung (5), insbesondere für den Garkorb (45), und zumindest eine Dichtvorrichtung (17), zumindest eine Verschlußvorrichtung (35a, 35b) und/oder zumindest eine Halterung für zumindest einen ersten Sensor, zumindest einen Garprozeßfühler (11), zumindest eine Düse (39) und/oder eine Handbrause (43).

2. Deckel nach Anspruch 1, **gekennzeichnet durch**
zumindest einen zweiten Sensor (7), vorzugsweise einen Temperatursensor zur Bestimmung der Temperatur zumindest eines Teils des Deckels, zumindest ein Gebläse, zumindest eine Beleuchtungsvorrichtung (47), zumindest eine Dampferzeugungseinheit, zumindest eine Pumpe, zumindest ein Ventil, zumindest eine Eingabeeinheit, zumindest eine Ausgabeeinheit, zumindest eine Speichereinheit, zumindest eine Steuer- und/oder Regeleinheit und/oder zumindest einen Mikroprozessor.

3. Deckel nach Anspruch 1 oder 2, **dadurch gekennzeichnet, daß**
die Absaugvorrichtung eine Filtervorrichtung für in abgesaugter Atmosphäre vorhandene Schmutz-, Fett- und/oder Geruchspartikel, und ein, vorzugsweise in der Drehzahl regelund/oder steuerbares, zweites Gebläse umfaßt, mit einer vom Gargerät (1) wegführenden, einen ersten Abfuhrkanal bildenden Abluftleitung (31) verbindbar ist und/oder mit zumindest einem Ablöschkasten zur Erzeugung eines Unterdrucks, in Wirkverbindung steht.

4. Deckel nach einem der vorangehenden Ansprüche, **dadurch gekennzeichnet, daß**
ein erster Zufuhrkanal ein Fluidzufuhrkanal ist, der mit zumindest einer Düse, einem, vorzugsweise mehrere Sprühdüsen (39) umfassenden, Drehsprinkler und/oder Kippsprinkler (37), einer Berieselungsvorrichtung, zumindest einem Durchflußmengensensor, zumindest einem ersten Ventil und/oder zumindest zeitweise mit der Dampferzeugungseinheit verbindbar ist.

5. Deckel nach einem der vorangehenden Ansprüche, **dadurch gekennzeichnet, daß**
ein erster Abfuhrkanal ein Fluidablaufkanal ist, der mit einer, vorzugsweise schmutzgängigen, Pumpe und/oder zumindest einem zweiten Ventil verbindbar ist.

6. Deckel nach einem der vorangehenden Ansprüche **gekennzeichnet durch**
einen zweiten Abfuhrkanal auf der dem Garbehälter (25) zugewandten Seite des Deckels (3, 3', 3") mit einer Verlängerung, vorzugsweise in Schnorchelform und/oder in der Länge variierbar.

7. Deckel nach einem der von Ansprüche 6, **dadurch gekennzeichnet, daß**
garprozeß-, reinigungsprozeß- und/oder gargutspezifische Daten, wie Feuchte, Druck, Temperatur, Luftbewegung im Garbehälter (25), Bräunung, (Ph)-Wert, Durchmesser des Garguts (27,27'), Dichte des Garguts (27,27'), Gargutart, Reifegrad des Garguts (27,27'), Konsistenz des Garguts (27,27'), Lagerzustand des Garguts (27,27'), Geschmack des Garguts (27,27'), Qualität des Garguts (27,27'), Krustenbildung des Garguts (27,27'), Vitaminabbau des Garguts (27,27'), Geruch, Entstehung konzerogener Substanzen, Hygiene, Wärmeleitfähigkeit des Garguts (27,27'), und/oder dergleichen, über die Sensoren (7) und/oder den Garprozeßfühler (11) aufnehmbar sind.

8. Deckel nach einem der vorangehenden Ansprüche, **dadurch gekennzeichnet, daß**
die Beleuchtungsvorrichtung (47) elektromagnetische Strahlung im sichtbaren Bereich und/oder im infraroten Bereich emittiert und/oder empfängt.

9. Deckel nach einem der vorangehenden Ansprüche, **dadurch gekennzeichnet, daß**
der Zufuhrkanal, der Abfuhrkanal und/oder eine Verbindungsleitung zumindest teilweise längs der Drehachse des Deckels (3, 3', 3") und/oder zumindest teilweise durch die Kippvorrichtung (5) verläuft bzw. verlaufen.

## Claims

1. A lid for a cooking appliance comprising at least one cooking container at least partially closable by the lid, the cooking container being particularly in the form of a pan, and/or at least one cooking surface at least partially coverable by the lid, **characterised in that**
the lid (3, 3', 3") is multi-functional,
at least one first medium (41) being adapted to be supplied via the lid (3, 3', 3") during cooking in the cooking appliance (1) and/or during cleaning of the cooking appliance (1), the supply being via at least one supply duct and/or at least one second medium (29) is adapted to be discharged via at least one suction extraction device and/or at least one discharge duct, and
the lid (3, 3', 3") fulfils mechanical functions via at least one raising/lowering device (15), particularly in order to convey at least one cooking basket (45) out of or into the cooking container (25), and via at least one tipping device (5), particularly for the cooking basket (45), and at least one sealing device (17), at least one closure device (35a, 35b) and/or at least one holder for at least a first sensor, at least one cooking process sensor (11), at least one nozzle (39) and/or a hand spray (43).

2. A lid according to claim 1, **characterised by** at least one second sensor (7), preferably a temperature sensor for determining the temperature of at least a part of the lid, at least one fan, at least one lighting device (47), at least one steam generating unit, at least one pump, at least one valve, at least one inputting unit, at least one outputting unit, at least one storage unit, at least one open and/or closed loop control unit and/or at least one microprocessor.

3. A lid according to claim 1 or 2, **characterised in that** the suction extraction device comprises a filter device for dirt, grease and/or odour particles present in the suction extracted atmosphere, and a second fan, the speed of rotation of which is adapted to open and/or closed loop control, is adapted to be connected to a waste air line (31) leading away from the cooking appliance (1) and forming a first discharge duct and/or is operatively connected to at least one quenching box to generate a negative pressure.

4. A lid according to any one of the preceding claims, **characterised in that** a first supply duct is a fluid supply duct which is connectable to at least one nozzle, a rotary sprinkler and/or tilting sprinkler (37) comprising preferably a plurality of spray nozzles (39), a trickle device, at least one flow volume sensor, at least one first valve and/or at least periodically to the steam generating unit.

5. A lid according to any one of the preceding claims, **characterised in that** a first discharge duct is a fluid discharge duct which is connectable to a pump, preferably a pump which can run in dirt, and/or at least one second valve.

6. A lid according to any one of the preceding claims, **characterised by** a second discharge duct on the side of the lid (3, 3', 3") facing the cooking container (25), with an extension, preferably in the form of a snorkel and/or variable in length.

7. A lid according to any one of claims 1 to 6, **characterised in that** data relating to the cooking process, cleaning process and/or specific to the food, such as moisture, pressure, temperature, air movement in the cooking container (25), browning, (pH) value, diameter of the food (27, 27'), density of the food (27, 27'), type of food, degree of ripeness of the food (27, 27'), consistency of the food (27, 27'), storage state of the food (27, 27'), taste of the food (27, 27'), quality of the food (27, 27'), crust formation on the food (27, 27'), vitamin degradation of the food (27, 27'), smell, occurrence of carcinogenic substances, hygiene, thermal conductivity of the food (27, 27') and/or the like are adapted to be recorded via the sensors (7) and/or the cooking process sensor (11).

8. A lid according to any one of the preceding claims, **characterised in that** the lighting device (47) emits and/or receives electromagnetic radiation in the visible range and/or in the infrared range.

9. A lid according to any one of the preceding claims, **characterised in that** the supply duct, the discharge duct and/or a connecting line extend(s) at least partially along the axis of rotation of the lid (3, 3', 3") and/or at least partially through the tilting device (5).

## Revendications

1. Couvercle pour un appareil de cuisson, comprenant au moins un récipient de cuisson refermable au moins partiellement par le couvercle, en particulier ayant la forme d'une casserole, et/ou au moins une surface de cuisson pouvant être couverte au moins partiellement par le couvercle, **caractérisé en ce que** le couvercle (3, 3',3") est multifonctionnel, sachant que,
par l'intermédiaire du couvercle (3, 3', 3"), lors de la cuisson dans l'appareil de cuisson de l'appareil de cuisson (1) et/ou lors du nettoyage de l'appareil de cuisson (1), au moins un premier fluide (41) peut être amené, par l'intermédiaire d'au moins un canal d'amenée, et/ou au moins un deuxième fluide (29) est susceptible d'être évacué, par l'intermédiaire d'au moins un dispositif d'aspiration et/ou au moins un canal d'évacuation, et
le couvercle (3, 3', 3") satisfait à des fonctions mécaniques, par l'intermédiaire d'un dispositif de levée/d'abaissement (15), en particulier pour transporter au moins une corbeille de cuisson (45), depuis, respectivement dans, le récipient de cuisson (25), et par l'intermédiaire d'au moins un dispositif de basculement (5), en particulier pour la corbeille de cuisson (45), et d'au moins un dispositif d'étanchéité (17), d'au moins un dispositif de fermeture (35a, 35b) et/ou d'au moins une fixation pour au mois un premier capteur, d'au moins une sonde de processus de cuisson (11), d'au moins une buse (39) et/ou d'au moins une douche à main (43).

2. Couvercle selon la revendication 1 **caractérisé par** au moins un deuxième capteur (7), de préférence un capteur de température, pour déterminer la température d'au moins une partie du couvercle, au moins une soufflante, au moins un dispositif d'éclairage (47), au moins une unité de production de vapeur, au moins une pompe, au moins une soupape, au moins une unité d'introduction, au moins une unité d'édition, au moins une unité de mémoire, au moins une unité de commande et/ou de régulation et/ou au moins un micro-processeur.

3. Couvercle selon la revendication 1 ou 2, **caractérisé en ce que** le dispositif d'aspiration présente un dispositif de filtrage pour des particules de souillure, de graisse et/ou odoriférantes présentes dans l'atmosphère aspirée, et une deuxième soufflante, de préférence à régulation et/ou à commande de la vitesse de rotation, susceptible d'être reliée à une conduite d'évacuation d'air (31) partant de l'appareil de cuisson (1), formant un premier canal d'évacuation, et/ou mise en liaison fonctionnelle avec au moins un caisson de refroidissement, pour produire une dépression.

4. Couvercle selon l'une des revendications précédentes **caractérisé en ce qu'**un premier canal d'amenée est un canal d'amenée de fluide, susceptible d'être relié à un pulvérisateur rotatif et/ou un pulvérisateur basculant (37), comprenant au moins une buse, de préférence plusieurs buses de pulvérisation (39), et d'être relié à un dispositif d'arrosage, à au moins un capteur de débit, au moins à une première soupape, au moins, par moments, à l'unité de production de vapeur.

5. Couvercle selon l'une des revendications précédentes, **caractérisé en ce qu'**un premier canal d'évacuation est un canal d'évacuation de fluide susceptible d'être relié à une pompe, de préférence laissant passer les souillures, et/ou au moins à une deuxième soupape.

6. Couvercle selon l'une des revendications précédentes, **caractérisé par** un deuxième canal d'évacuation, sur le côté, tourné vers le récipient de cuisson (25), du couvercle (3,3', 3"), avec un prolongement, de préférence ayant la forme d'un tuba renifleur et/ou dont la longueur peut être modifiée.

7. Couvercle selon l'une des revendications 1 à 6, **caractérisé en ce que** des données, spécifiques au processus de cuisson, au processus de nettoyage et/ou au produit à cuire, telles que l'humidité, la pression, la température, le déplacement de l'air dans le récipient de cuisson (25), le brunissement, la valeur du (pH), le diamètre du produit à cuire (27, 27'), la densité du produit à cuire (27, 27'), le type de produit à cuire, le degré de maturité du produit à cuire (27, 27'), la consistance du produit à cuire (27, 27'), l'état de stockage du produit à cuire (27, 27'), le goût du produit à cuire (27, 27'), la qualité du produit à cuire (27, 27'), la formation de croûte du produit à cuire (27,27'), la décomposition des vitamines du produit à cuire (27, 27'), l'odeur, la production de substances cancérigènes, l'hygiène, la conductivité thermique du produit à cuire (27, 27') et/ou analogues, peuvent être enregistrés par l'intermédiaire des capteurs (7) et/ou de la sonde de processus de cuisson (11).

8. Couvercle selon l'une des revendications précédentes, **caractérisé en ce que** le dispositif d'éclairage (47) émet et/ou capte un rayonnement électromagnétique dans le domaine visible et/ou dans le domaine infrarouge.

9. Couvercle selon l'une des revendications précédentes, **caractérisé en ce que** le canal d'amenée et le canal d'évacuation et/ou une conduite de liaison s'étend,. respectivement s'étendent, au moins partiellement le long partiellement le long de l'axe de rotation (3, 3', 3") et/ou au moins partiellement à travers le dispositif de basculement (5).
